# EUROPÄISCHE PATENTSCHRIFT

(11) **EP 1 532 182 B1**
(45) Veröffentlichungstag und Bekanntmachung des Hinweises auf die Patenterteilung: **06.12.2006**
(21) Anmeldenummer: 03797215.5
(22) Anmeldetag: 25.07.2003
(51) Int. Cl.: C08F 20/12, C09J 133/00, C08J 3/24, C08J 3/28, C08F 220/12

(54) **UV-INITIIERTE THERMISCH VERNETZTE ACRYLATHAFTKLEBEMASSEN**
UV-INITIATED THERMALLY CROSS-LINKED ACRYLATE PRESSURE-SENSITIVE ADHESIVE SUBSTANCES
MATIERES AUTO-ADHESIVES ACRYLIQUES A RETICULATION THERMIQUE INITIEE PAR UV

(30) Priorität: 20.08.2002 DE 10237950
(43) Veröffentlichungstag der Anmeldung: 25.05.2005
(73) Patentinhaber: tesa AG, 20253 Hamburg (DE)
(72) Erfinder: HUSEMANN, Marc, 22605 Hamburg (DE); ZÖLLNER, Stephan, 21244 Buchholz/Nordheide (DE)
(86) Internationale Anmeldenummer: PCT/EP2003/008238
(87) Internationale Veröffentlichungsnummer: WO 2004/026922

(56) Entgegenhaltungen:
- US-A1- 2001 033 988

## Beschreibung

Die Erfindung betrifft eine neue UV-initiierte thermische Vernetzung von Acrylathaftklebemassen sowohl durch ganzflächige als auch durch selektive Bestrahlung.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Ein konsequenter Weg wäre die Einführung der Hotmelt-Technologie. Mit der Einführung dieser Technologie werden aber auch sehr hohe Anforderungen an die Haftklebemasse gestellt. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließender effizienter Vernetzung erreicht. Diese sehr scherfesten und polaren Haftklebemassen besitzen aber den Nachteil, dass sie für den Hotmelt-Extrusionsprozeß nicht gut geeignet sind, da hohe Anwendungstemperaturen erforderlich sind und da außerdem durch Scherung im Extruder das Molekulargewicht des Polymers abgebaut wird. Durch diese Schädigung wird das klebtechnische Niveau deutlich herabgesetzt. Die Klebkraft und die Anfaßklebrigkeit (Tack) sind in der Regel gering, da die Glasübergangstemperatur durch die polaren Anteile in den Klebemassen relativ hoch liegt. Besonders die Scherfestigkeiten der Hotmelt-beschichteten Acrylathaftklebemassen fallen - im Vergleich zur ursprünglichen mit Lösungsmittel beschichteten Haftklebemasse - deutlich ab. Ein Hauptgrund liegt in der Vernetzungsqualität, da Acrylataftklebemassen aus Lösung in der Regel thermisch vernetzt werden. Die thermische Vernetzung besitzt einen großen Vorteil: Niedermolekulare Bestandteile im Polymer werden mit vernetzt und somit weisen thermisch vemetzte Haftklebemassen eine höhere Kohäsion auf.

Acrylathotmelts können nicht thermisch vernetzt werden, da im Hotmelt-Verarbeitungsprozess bereits hohe Temperaturen aufgebracht werden, die eine Vergelung während des Prozesses bewirken würden. Daher werden in der Regel Acrylathotmelts UV oder durch Elektronenstrahlen (ES) vernetzt. Beispiele für die UV bzw. ES-Vernetzung sind US 5,194,455 oder DE 27 43 979 oder US 5,073,611.

In US 5,877,261 werden Acrlyathotmelts mit geblockten Polyisocyanaten vernetzt. Diese Polymere weisen aber nur eine begrenzte Haltbarkeit auf. Weiterhin müssen zur Vernetzung auf dem Trägermaterial sehr hohe Temperaturen aufgewendet werden, die dazu führen, dass der Träger geschädigt wird. Ein konkretes Beispiel ist das Austrocknen von Trennpapieren, ein weiteres Beispiel das Anschmelzen von PP bzw. PE-Trägermaterialien.

Es besteht somit der Bedarf für ein thermisches Vemetzungsverfahren für Acrylatschmelzhaftkleber, wobei die Vernetzung erst nach oder während der Beschichtung initiiert wird und somit im Hotmeltprozess keine Vemetzungsreaktionen auftreten können.

Aufgabe der Erfindung ist es, eine Polyacrylathaftklebemasse zur Verfügung zu stellen, die zu einem Hotmelt aufkonzentriert werden und aus der Schmelze verarbeitet kann, wobei nach oder während der Beschichtung eine thermische Vernetzung möglich ist. Die Vemetzungsreaktion soll bevorzugt thermisch auf dem Trägermaterial ablaufen und durch die Vernetzung soll die Scherfestigkeit der Haftklebemasse ansteigen.

Gelöst wird diese Aufgabe durch eine Polyacrylathaftklebemasse gemäß Anspruch 1 sowie ein zugehöriges Verfahren zur Herstellung von Polyadrylatschmelzhaftklebern gemäß Anspruch 5 und die Verwendung dieser Produkte gemäß Anspruch 13. Die Unteransprüche betreffen vorteilhafte Weiterbildungen der Erfindung

Demgemäß sind Gegenstand der Erfindung Polyacrylathaftklebemassen, welche im wesentlichen ein Polymerisat aus
a) einem Comonomerengemisch aus
   a1) Acrylsäure und/oder Acrylsäureester der folgenden Formel

      CH₂ = C(R¹)(COOR²),

      wobei R¹ = H oder CH₃ und R² eine Alkylkette mit 1-20 C-Atomen ist,
      zu 55 - 99 Gew.-%, bezogen auf Komponente (a),
   a2) olefinisch ungesättigte Monomere mit funktionellen Gruppen, nämlich insbesondere mit Hydroxygruppen, Sulfonsäuregruppen, Estergruppen, Ethergruppen, Anhydridgruppen, Epoxygruppen, Amidgruppen, Aminogruppen, mit aromatischen, heteroaromatischen und/oder heterozyklischen Gruppen, zu 0 - 30 Gew.-%, bezogen auf Komponente (a),
   a3) Acrylat oder Methacrylat mit mindestens einer funktionellen Gruppe zu 1 - 15 Gew.-%, bezogen auf Komponente (a), die dazu befähigt ist, mit einer photochemisch erzeugten Base c), gegebenenfalls unter Zusatz eines Katalysators, zu reagieren
enthalten und wobei das Polymerisat wenigstens teilweise mit der Base c) in einem Anteil von 0,01 - 25 Gew.-%, bezogen auf die Gesamt-Polymermischung thermisch vernetzt ist.

In einer sehr bevorzugten Auslegung werden für die Monomere a1) Acrylmonomere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie z.B. 2-Ethylhexylacrylat. Weitere einzusetzende Verbindungsklassen, die ebenfalls in geringen Mengen unter a1) hinzugesetzt werden können, sind Methylmethacrylate, Cyclohexylmethacrylate und Isobornylmethacrylate.

In einer weiteren bevorzugten Auslegung werden für die Monomere a2) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril. In einer weiteren sehr bevorzugten Auslegung für die Monomere a2) werden Monomere mit folgenden funktionellen Gruppen eingesetzt: Hydroxy-, Carboxy-, Säureamid-, Isocyanato- oder Aminogruppen. Diese Gruppen werden zur Steuerung der klebtechnischen Eigenschaften eingesetzt und nicht als funktionelle Gruppen zur Vernetzung mit der gebildeten Base.

In einer vorteilhaften Variante werden für a2) Acrylmonomere entsprechend der folgenden allgemeinen Formel eingesetzt, 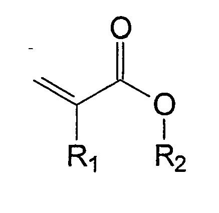 wobei R₁ = H oder CH₃ ist und der Rest -OR₂ die funktionelle Gruppe der Haftklebemasse darstellt oder beinhaltet und nicht als funktionelle Gruppe zur Vernetzung mit der aus b) gebildeten Base.

Besonders bevorzugte Beispiele für die Komponente a2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid, Benzylacrylat, Benzylmethacrylat, Phenylacrylat, Phenylmethacrylat, t-Butylphenylacrylat, t-Butylphenylmethacrylat, Phenoxyethylacrylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofurfurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Auslegung werden für die Komponente a2) aromatische Vinylverbindungen eingesetzt, wobei bevorzugt die aromatischen Kerne aus C₄ bis C₁₈ bestehen und auch Heteroatome enthalten können. Besonders bevorzugte Beispiele sind Styrol, 4-Vinylpyridin, N-Vinylphthalimid, α-Methylstyrol, 3,4-Dimethoxystyrol, 4-Vinylbenzoesäure, wobei diese Aufzählung nicht abschließend ist.

Für die Monomere a3) werden Monomere eingesetzt, die eine funktionelle Gruppe tragen, die zu einer Reaktion mit der aus b) erzeugten Base befähigt ist, gegebenenfalls unter Mitwirkung eines Katalysators oder einer anderen Vernetzersubstanz. In bevorzugten Auslegungen werden Comonomere mit zumindestens einer Carbonsäuregruppe, einer Isocyanatogruppe oder Epoxidgruppe eingesetzt.
In sehr bevorzugten Auslegungen werden Comonomere wie Glycidylmethacrylat, Acrylsäure, Methacrylsäure oder 2-lsocyanatoethylmethacrylat eingesetzt.

Zur Polymerisation werden die Monomere dermaßen gewählt, dass die resultierenden Polymere als industriell verwendbare Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft unterhalb 15°C.

Vorzugsweise werden als Photobasenerzeuger O-Acyloxime, Anilidderivate, Ammoniumsalze oder metallorganische Verbindungen eingesetzt, die unter UV-Bestrahlung eine Base freisetzen.

In einer bevorzugten Auslegung werden als Photobasenerzeuger O-Acyloxime eingesetzt.

Im folgenden sind einige bevorzugte Varianten dargestellt, ohne sich auf diese Verbindungen beschränken zu wollen.

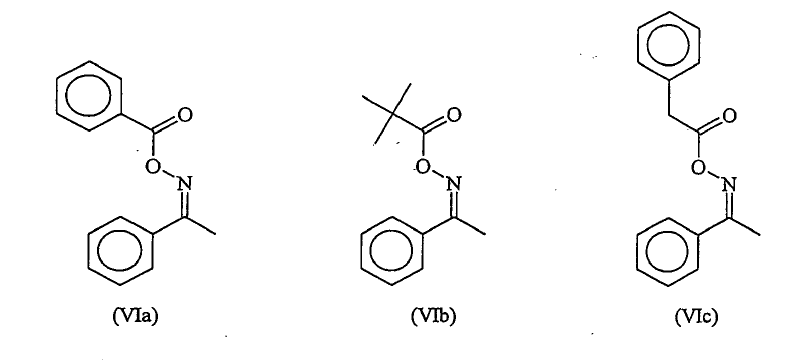

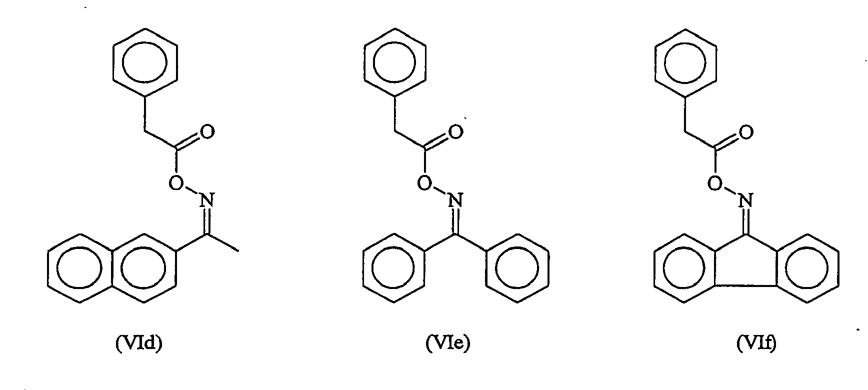

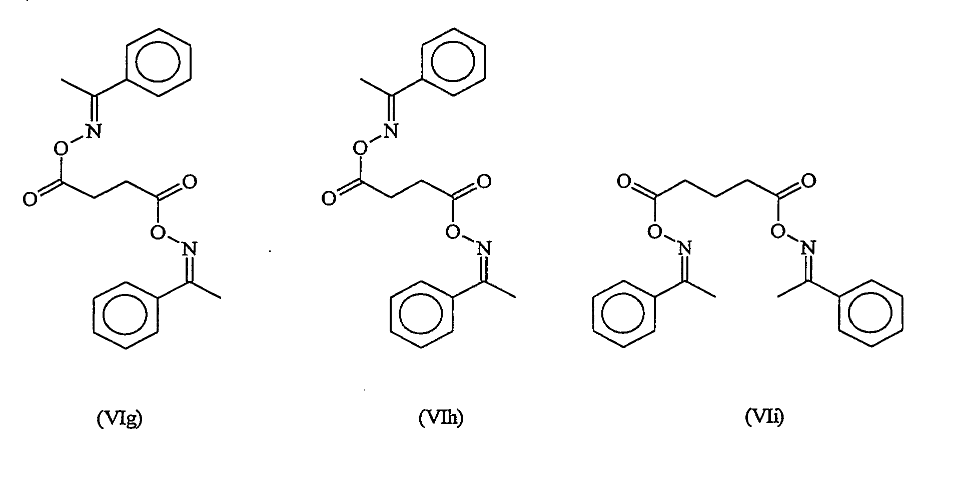

Die erfindungsgemäßen Haftklebemassen werden mittels der aus dem Photobasenerzeuger erhaltenen Base nach folgendem Muster vernetzt:

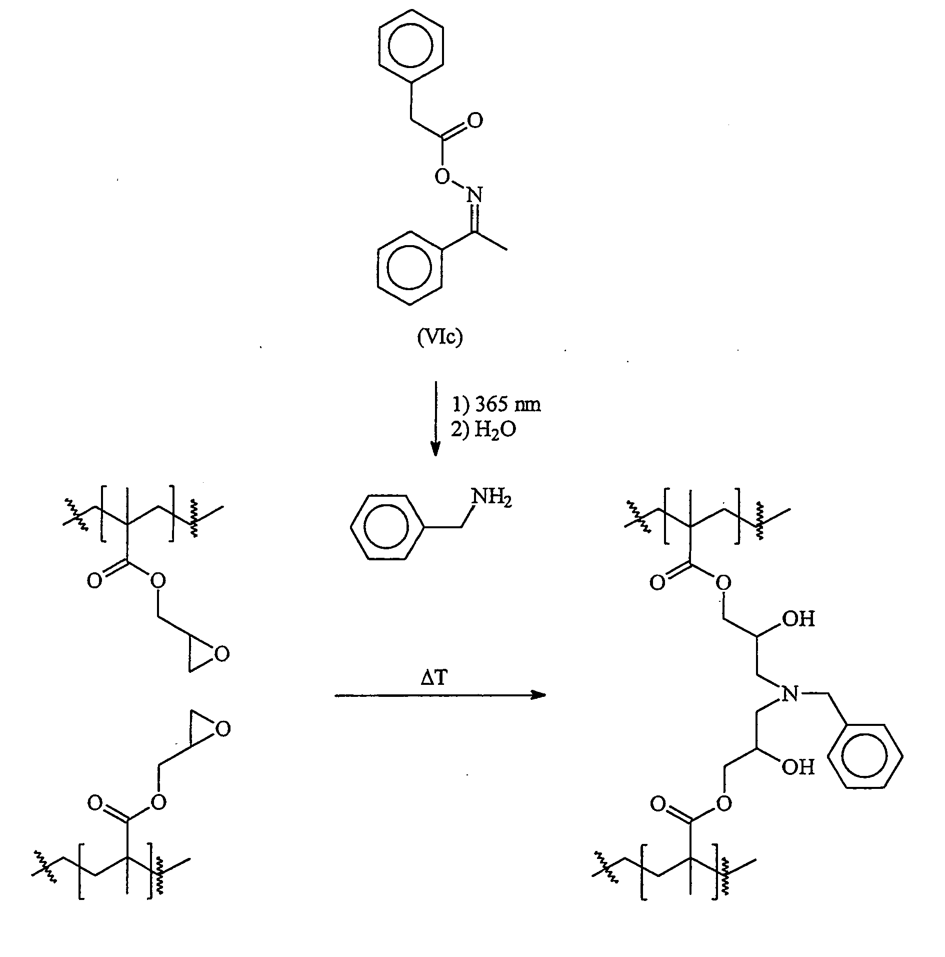

Die zugegebene Menge der Photobasenerzeuger orientiert sich ah der Menge der Funktionen (hier Epoxidfunktionen), die zur Vernetzung der Acrylathaftklebemasse genutzt werden sollen. Im sehr bevorzugten Fall werden äquimolare Mengen zum molaren Anteil an Epoxid-haltigen Comonomeren hinzugegeben. Hierbei muss berücksichtigt werden, dass ein Photobasenerzeuger durch die chemische Struktur auch zwei Moleküle Amin (hier Benzylamin) freisetzen kann. Weiterhin reagiert ein Molekül Amin bzw. Benzylamin mit zwei Polymeren, um eine Verknüpfungsreaktion durchzuführen. Durch die Menge Photobasenerzeuger kann somit die Anzahl der zu erzeugenden Verknüpfungsstellen variiert werden. Weiterhin muss bei der Menge zugegebenden Photobasenerzeugers berücksichtigt werden, dass die Ausbeute der gebildeten Amins nach der Bestrahlung ebenfalls limitiert ist. Die Quantenausbeute der Aminbildung hängt zum einen von der chemischen Struktur des Photobasenerzeugers ab und zum anderen von der Polymermatrix.

Ein weiterer Einflußfaktor ist die Vemetzungseffizienz. Das freigesetzte Benzylamin kann ebenfalls mit zwei Epoxidfunktionen einer Polymerkette reagieren, so dass durch diese Reaktion keine Vernetzung stattfindet. Auch dieser Einflußfaktor muss bei der Menge zugebenen Photobasenerzeugers mit berücksichtigt werden.

Neben den freien O-Acyl-Oximen lassen sich Photobasenerzeuger auch über das Polymer einführen. In diesem Fall werden in einer bevorzugten Auslegung O-Acyl-oxime oder ähnliche Verbindungen mit einer vinylischen Doppelbindung in die Acrylathaftklebemasse copolymerisiert oder entlang der Polymerkette erzeugt. Als bevorzugte reaktive Gruppen stehen Acrylat-, Methacrylat und endständige Vinylverbindungen zur Verfügung. Diese Verbindungen lassen sich im Sinne von den Monomeren a2) einsetzen. In diesem besonderen Fall kann auf den Zusatz von freien Photobasenerzeugem verzichtet werden. Um mit dieser Methode eine effiziente Vernetzung zu erreichen, empfiehlt sich aber auch der Zusatz einer Vernetzungskomponente. Hier eignen sich zumindestens bifunktionelle Gruppen, die eine Gruppe X tragen, die zu einer Reaktion mit der generierten Base befähigt ist. In einigen besonders bevorzugten Auslegungen werden Hydrochinon, bifunktionelle Epoxide oder bifunktionelle Carbonsäuren hinzugegeben.

Weiterhin können als Photobasenerzeuger Formanilidderivate zugesetzt werden. In diesem Fall werden unter UV-Licht Bestrahlung Aminverbindungen freigesetzt, die dann z.B. mit Carbonsäuregruppen der Polymerketten reagieren können und somit eine Vernetzung hervorrufen.

Im folgenden sind einige spezifische Beispiele dargestellt, ohne sich durch diese Aufzählung einschränken zu wollen.

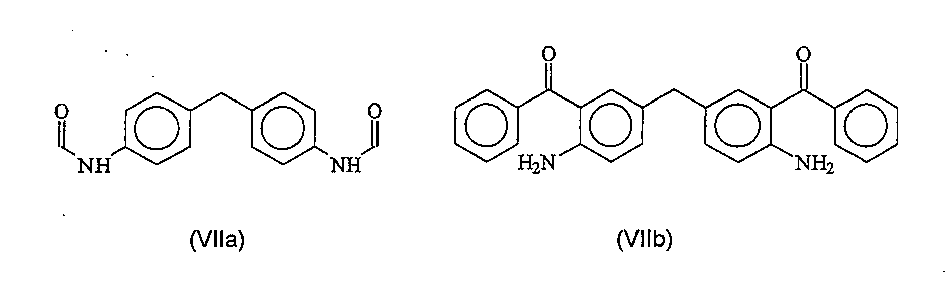

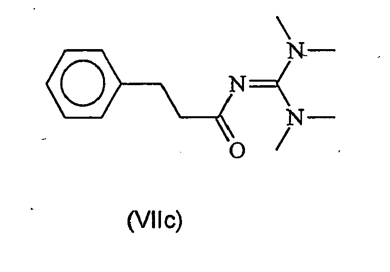

Neben der Gruppe der Anilide lassen sich auch Ammoniumsalze als Photobasenerzeuger einsetzen, die unter UV-Licht Bestrahlung freie Amine erzeugen. Im folgenden sind einige spezifische Beispiele genannt, ohne dadurch beschränken zu wollen.

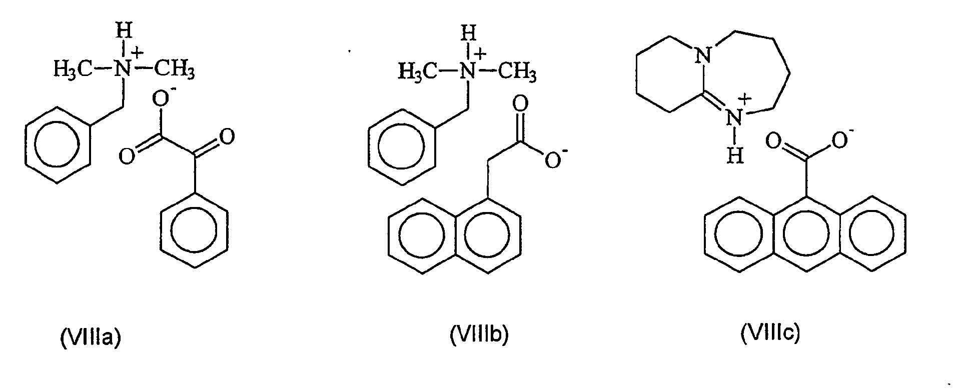

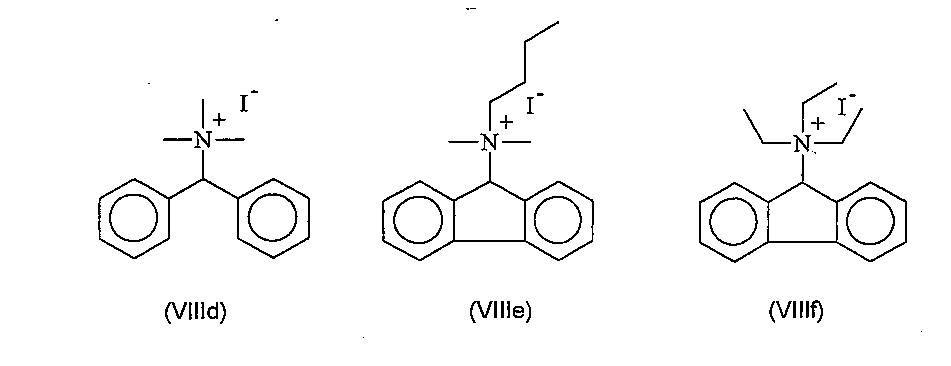

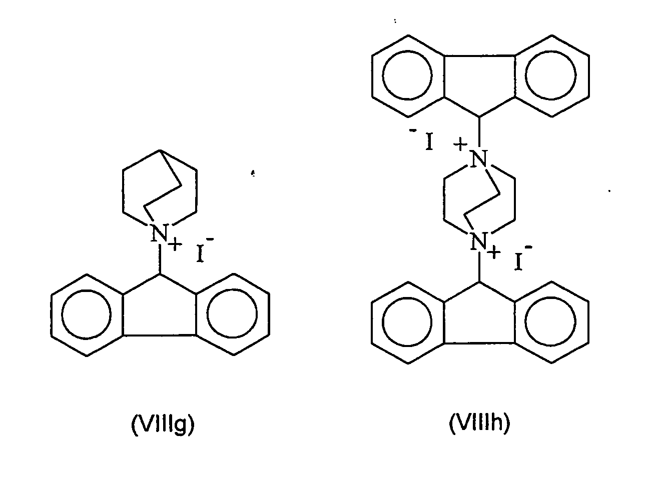

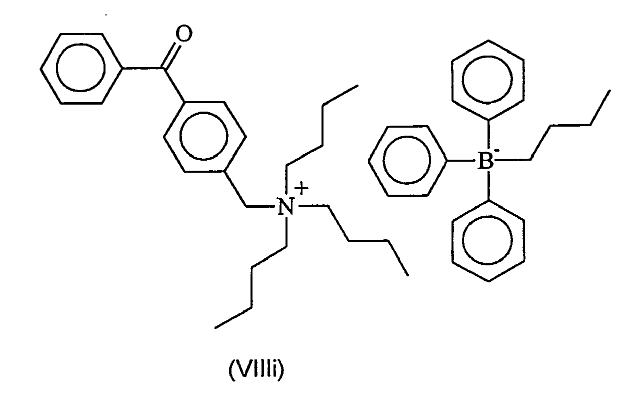

Neben der Gruppe der Anilide und Ammoniumsalze als Photobasenerzeuger lassen sich auch Photobasen einsetzen, die nach der UV-Bestrahlung multifunktionelle Thiole freisetzen. Ein spezifisches Beispiel ist im folgenden dargestellt.

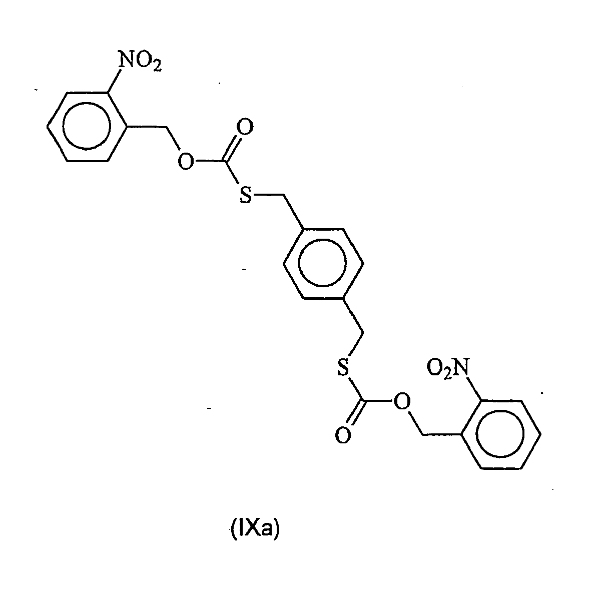

Neben den vorangegangenen Photobasenerzeugem existieren eine Vielzahl von metallorganischen Verbindungen, die ebenfalls unter UV-Bestrahlung Basen freisetzen.

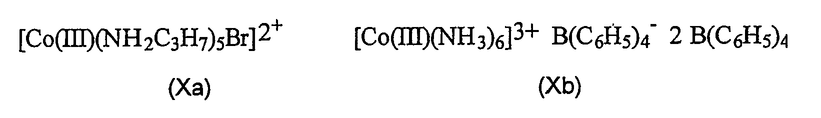

Neben Aminen lassen sich aber auch Imidazole durch UV-Strahlung mit z.B. folgenden Photobasenerzeuger generieren.

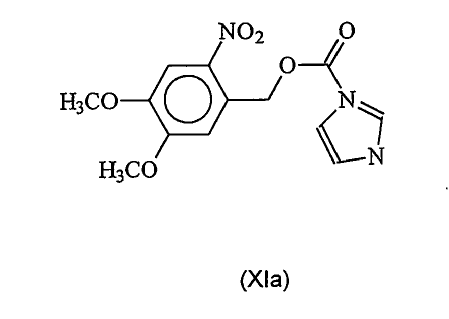

Weitere difunktionelle Amine können mit folgenden Verbindungen erzeugt werden.

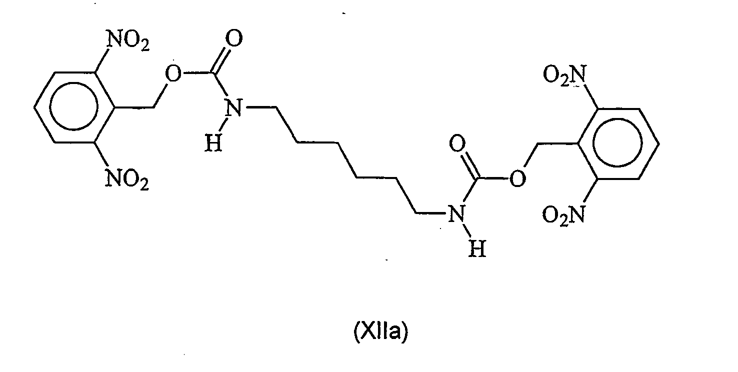

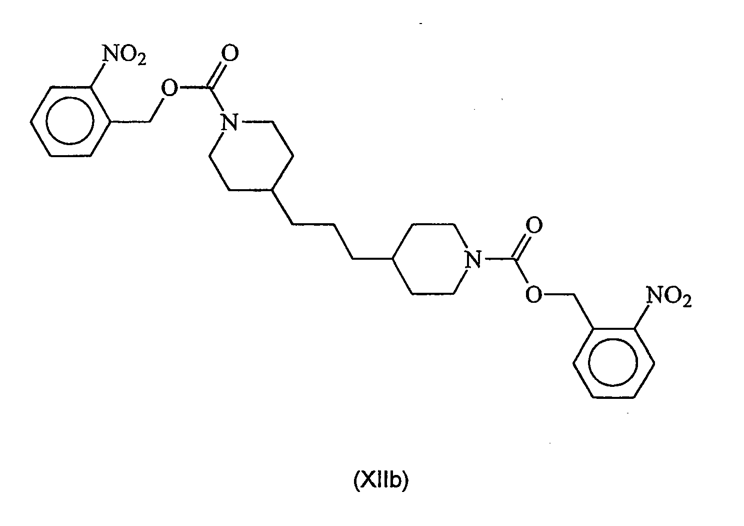

Zur Vernetzung mit UV-Licht werden in einer sehr vorteilhaften Auslegung der Erfindung den Polyacrylathaftklebemassen weitere UV-absorbierende Photoinitiatoren zugesetzt. Nützliche Photoinitiatoren, welche sehr gut zu verwenden sind, sind Benzoinether, wie z.B. Benzoinmethylether und Benzoinisopropylether, substituierte Acetophenone, wie z.B. 2,2-Diethoxyacetophenon (erhältlich als lrgacure 651^{®} von Fa. Ciba Geigy^{®}), 2,2-Dimethoxy-2-phenyl-1-phenylethanon, Dimethoxyhydroxyacetophenon, substituierte Ketole, wie z.B. 2-Methoxy-2-hydroxypropiophenon, aromatische Sulfonylchloride, wie z.B. 2-Naphthylsulfonylchlorid, und photoaktive Oxime, wie z.B. 1-Phenyl-1,2-propandion-2-(O-ethoxycarbonyl)oxim. In einer sehr bevorzugten Auslegung wird Benzophenon hinzugegeben.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA; London zu Rate gezogen werden.

Die erfindungsgemäßen Polyacrylat-Haftklebemassen werden mit Hilfe eines zugehörigen erfindungsgemäßen Verfahrens erhalten, bei welchem Polymerisate hergestellt werden aus
a) einem Comonomerengemisch aus
   a1) Acrylsäure und/oder Acrylsäureestern der folgenden Formel

      CH₂ = C(R¹)(COOR²),

      wobei R¹ = H oder CH₃ und R² eine Alkylkette mit 1 - 20 C-Atomen ist,
      zu 55 - 99 Gew.-%, bezogen auf Komponente (a),
   a2) olefinisch ungesättigten Monomeren mit funktionellen Gruppen, nämlich insbesondere mit Hydroxygruppen, Sulfonsäuregruppen, Estergruppen, Ethergruppen, Anhydridgruppen, Epoxygruppen, Amidgruppen, Aminogruppen, mit aromatischen, heteroaromatischen und/oder heterozyklischen Gruppen, zu 0 - 30 Gew.-%, bezogen auf Komponente (a),
   a3) Acrylat oder Methacrylat mit mindestens einer funktionellen Gruppe zu 1 - 15 Gew.-%, bezogen auf Komponente (a), die dazu befähigt ist, mit der durch b) erzeugten Base gegebenenfalls mit einer katalysierenden Verbindung zu reagieren
und b) wenigstens einem Photobasenerzeuger
   zu 0,01 - 25 Gew.-%, bezogen auf die Gesamt-Polymermischung
wobei b) eingemischt oder einpolymerisiert wird und wobei das lösungsmittelfreie oder von Lösungsmittel weitgehend befreite Polymerisat mit dem Photobasenerzeuger im Heißschmelzverfahren auf einen Träger beschichtet wird, während oder nach der Beschichtung mit UV-Licht bestrahlt wird, hierdurch photochemisch eine Base erzeugt und die Masse anschließend thermisch durch Reaktion wenigstens der Komponente a3) mit der Base vernetzt wird.

Vorzugsweise wird das Lösungsmittel - falls ein solches verwendet wird - unter Vakuum in der Wärme entzogen. In einer besonders vorteilhaften Ausführungsform kann das Polymerisat auf einen Wasserfilm aufgelegt und anschließend auf das Trägermaterial übertragen werden, wobei das Wasser vorzugsweise zur Vernetzung der Haftklebemasse beiträgt. Dies wird nachfolgend noch genauer beschrieben.

Zur Herstellung der Polyacrylathaftklebemassen werden zunächst konventionelle radikalische Polymerisationen oder kontrollierte radikalische Polymerisationen zur Herstellung der anschließend zu vemetzenden Polymerisate durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cydohexancarbonsäurenitrii) (Vazo 88^{™} der Fa. DuPont) verwendet.

Die mittleren Molekulargewichte Mₙ der bei der kontrollierte radikalischen Polymerisation entstehenden Haftklebemassen werden derart gewählt, dass sie in einem Bereich von 20.000 und 2.000.000 g/mol liegen; speziell für die weitere Verwendung als Schmelzhaftkleber werden Haftklebemassen mit mittleren Molekulargewichten Mₙ von 100.000 bis 500.000 g/mol hergestellt. Die Bestimmung des mittleren Molekulargewichtes erfolgt über Größenausschlußchromatographie (SEC) oder Matrix-unterstützte Laser-Desorption/lonisations-Massenspektrometrie (MALDI-MS).

Die Polymerisation kann in Substanz, in Gegenwart eines organischen Lösungsmittels, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, butyl-, oder -hexylester), halogenierte Kohlenwasserstoffe (Chlorbenzol), Alkanole (Methanol, Ethanol, Ethylenglycol, Ethylenglycolmonomethylether) und Ether (Diethylether, Dibutylether) oder Gemische davon.

Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.
Die Polymerisationszeit beträgt - je nach Umsatz und Temperatur - zwischen 4 und 72 Stunden. Je höher die Reaktionstemperatur gewählt werden kann, d.h., je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 -160°C, je nach Initiatortyp, initiiert werden.

Zur Herstellung von Polyacrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:
worin 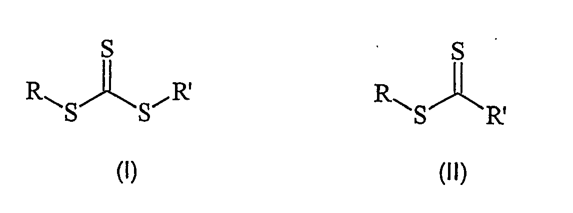
- R und R' unabhängig voneinander gewählt oder gleich sind
   - verzweigte und unverzweigte C₁- bis C₁₈-Alkylreste; C₃- bis C₁₈-Alkenylreste; C₃-bis C₁₈-Alkinylreste;
   - H oder C₁- bis C₁₈Alkxoy
   - durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
   - C₂-C₁₈-Hetero-Alkylreste mit mindestens einem O-Atom und/oder einer NR'-Gruppe in der Kohlenstoffkette
   - mit zumindest einer Estergruppe, Amingruppe, Carbonatgruppe, Cyano, Isocyano und/oder Epoxidgruppe und/oder mit Schwefel substituierte C₁-C₁₈-Alkylreste, C₃-C₁₈-Alkenylreste, C₃-C₁₈-Alkinylreste;
   - C₃-C₁₂-Cycloalkylreste
   - C₆-C₁₈- Aryl- oder Benzylreste
   - Wasserstoff
darstellen;

Kontrollreagenzien des Typs (1) besten in einer mehr bevorzugten Auslegung aus folgenden weiter eingeschränkten Verbindungen:
Halogene sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.

Ein geeigneter C₂-C₁₈-Hetero-Alkylrest mit mindestens einem O-Atom in der Kohlenstoffkette ist beispielsweise -CH₂-CH₂-O-CH₂-CH₃.
Als C₃-C₁₂-Cycloalkylreste dienen beispielsweise Cyclopropyl, Cyclopentyl, Cyclohexyl oder Trimethylcyclohexyl.
Als C₆-C₁₈-Arylreste dienen beispielsweise Phenyl, Naphthyl, Benzyl, 4-tert.-Butylbenzyl- oder weitere substituierte Phenyl, wie z.B. Ethyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen geeignet, 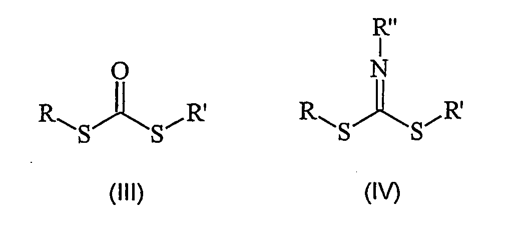 wobei R" die entweder die Reste R oder R' umfassen kann.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Auslegung die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt: 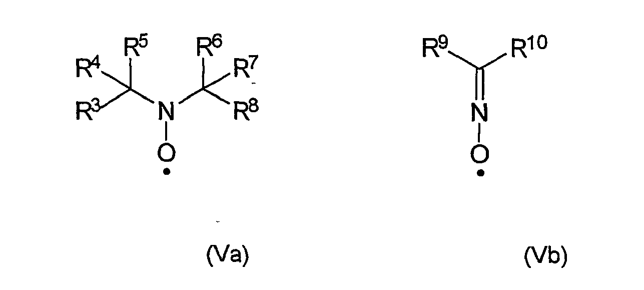 wobei R³, R⁴, R⁵, R⁶, R⁷, R⁸, R⁹, R¹⁰ unabhängig voneinander folgende Verbindungen oder Atome bedeuten:
i) Halogenide, wie z.B. Chlor, Brom oder lod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester -COOR¹¹, Alkoxide -OR¹² und/oder Phosphonate -PO(OR¹³)₂,
wobei R¹¹, R¹² oder R¹³ für Reste aus der Gruppe ii) stehen.

Verbindungen der (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:
- 2,2,5,5-Tetramethyl-1-pyrrolidinyloxyl (PROXYL), 3-Carbamoyl-PROXYL, 2,2-d'imethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Bereits die US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Zur Weiterentwicklung können den Polyacrylathaftklebemassen Harze beigemischt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt werden.

Die Polyacrylathaftklebemassen können aus Lösung oder aus der Schmelze auf das Trägermaterial aufgetragen werden. Für den Auftrag aus der Schmelze wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

In einer bevorzugten Auslegung der Erfindung - insbesondere wenn Wasser als Katalysator oder zur Vernetzung benötigt wird - werden die Haftklebemassen auf einen Wasserfilm abgelegt. In einer bevorzugten Auslegung der Erfindung befindet sich der Wasserfilm auf einer Metallwalze.

Die Metallwalze kann mit einem wirksamen Kühlsystem ausgerüstet sein, um die erheblichen Wärmemengen wegzutransportieren. Für einige Fälle kann es aber auch von Vorteil sein, den Wasserfilm durch ein Heizsystem zu erhitzen.

Zur Verhinderung der Korrosion ist sie gewöhnlich mit einer Schutzschicht überzogen. Diese wird bevorzugt so ausgewählt, dass sie von dem Kontaktmedium gut benetzt wird. Im allgemeinen ist die Oberfläche leitfähig. Es kann aber auch günstiger sein, sie mit einer oder mehreren Schichten aus isolierendem oder halbleitendem Material zu beschichten.

Des weiteren kann die Metallwalze makroskopisch glatt oder eine gering strukturierte Oberfläche aufweisen. Es hat sich bewährt, wenn sie eine Oberflächenstruktur besitzt, insbesondere eine Aufrauhung der Oberfläche. Die Benetzung durch das Kontaktmedium kann dadurch verbessert werden.

Besonders gut läuft das Verfahren ab, wenn die Metallwalze temperierbar ist bevorzugt in einem Bereich von -10 C bis 200 C, ganz besonders bevorzugt von 5 C bis 70 C.

Als Kontaktflüssigkeit wird vorteilhaft Wasser eingesetzt. In einer weiteren Variante, welche im erfinderischen Sinne hervorragend geeignet ist, werden dem Kontaktmedium Wasser Substanzen zugesetzt, die darin zumindest teilweise löslich sind. Für Wasser als Kontaktmedium bieten sich als Zusätze beispielsweise Alkylalkohole wie Ethanol, Propanol, Butanol, Hexanol an, ohne sich durch diese Beispiele in der Auswahl der Alkohole einschränken zu wollen. Weiterhin sehr vorteilhaft sind insbesondere längerkettige Alkohole, Polyglykole, Ketone, Amine, Carboxylate, Sulfonate und dergleichen.
Als sehr vorteilhaft hat sich herausgestellt, als Kontaktmedium eine Flüssigkeit zu verwenden, die gegebenenfalls Additive für zusätzliche Funktionen erhält. Dazu gehören die Erhöhung der Benetzung der Oberfläche.

Eine Absenkung der Oberflächenspannung kann auch durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside (z.B. ß-Di(hydroxyalkyl)sulfoniumsalz), weiterhin beispielsweise ethoxylierte Nonylphenylsulfonsäureammoniumsalze. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Für den Fall, dass Wasser als Kontaktmedium eingesetzt wird, kann man in hervorragender Weise vorgehen, wenn eine zweite Walze, vorteilhaft mit einer benetzbaren oder saugfähigen Oberfläche, durch ein Bad mit dem Kontaktmedium läuft, dabei mit dem Kontaktmedium benetzt oder getränkt wird und durch Berührung mit der Kühlwalze einen Film dieses Kontaktmediums aufträgt bzw. aufstreicht.

In einer sehr bevorzugten Auslegung der Erfindung wird die Haftklebemasse direkt auf dem Wasserfilm der Metallwalze mit UV-Licht bestrahlt.

In einer für das Verfahren vorteilhaften Vorgehensweise wird mittels kurzzeitiger ultravioletter Bestrahlung in einem Wellenlängenbereich von 200 bis 400 nm, je nach verwendeten Photobasenerzeuger, insbesondere unter Verwendung von Quecksilber-Hochdruck- oder -Mitteldruck-Lampen bei einer Leistung von 80 bis 240 W/cm, operiert. Die Bestrahlungsintensität wird der jeweiligen Quantenausbeute des Photobasenerzeugers angepasst. Nach der Beschichtung auf dem Wasserfilm und UV-Bestrahlung wird die Polyacrylathaftklebemassen von dem Wasserfilm auf ein Trägermaterial übertragen.

Als Trägermaterialien für die Haftklebemasse, beispielsweise für Haftklebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Das Heranführen des Trägers, d.h. z.B. der releasebeschichteten Materialien wie Papiere, Folien, Vliese (non wowens), ist vorteilhafterweise unter einem gewissen Andruck vorzunehmen.

Nach der Beschichtung auf dem Träger wird das Haftklebeband in einer bevorzugten Auslegung nochmals mit UV-Licht bestrahlt. In einer vorteilhaften Variante wird mittels kurzzeitiger ultravioletter Bestrahlung in einem Wellenlängenbereich von 200 bis 400 nm, je nach verwendeten Photobasenerzeuger, insbesondere unter Verwendung von Quecksilber-Hochdruck- oder -Mitteldruck-Lampen bei einer Leistung von 80 bis 240 W/cm, vorgegangen. Die Bestrahlungsintensität wird der jeweiligen Quantenausbeute des Photobasenerzeugers angepasst.

Für das Verfahren kann es - insbesondere wenn Wasser als Katalysator oder zur Vernetzung benötigt wird - von großem Vorteil sein, das -Haftklebeband während oder nach der UV-Vernetzung mit Wasser in Kontakt kommen zu lassen. In einer Variante wird das Haftklebeband durch ein Wasserbad gefahren, in einer anderen Variante wird das Haftklebeband durch eine Klimakammer mit hoher Luftfeuchtigkeit geführt. Auch ist es möglich, die Haftklebebänder in einer Klimakammer mit hoher Luftfeuchtigkeit zu lagern. In einer sehr bevorzugten Auslegung des Verfahrens wird das Haftklebeband nach der UV-Bestrahlung und Befeuchtung durch Wasser nochmals erhitzt. Dies kann in einer sehr bevorzugten Auslegung in einem Trockenkanal geschehen. Zur Initiierung der Vernetzungsreaktion wird das Haftklebeband auf zumindest 80°C, in einer sehr bevorzugten Variante auf zumindestens 100°C erhitzt. Zur Erhitzung können unterschiedliche Strahler verwendet werden, die alle in der Lage sind Wärme abzugeben. In einer sehr bevorzugten Auslegung werden IR-Strahler eingesetzt. In sehr einfachen und praxisgerechten Ausführungen eignen sich aber auch Heissluftgebläse oder andere durch elektrische Energie erzeugende Wärmemaschinen.

Prinzipiell ist es auch möglich, die Polyacrylathaftklebemasse mit Elektronenstrahlen zusätzlich zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

In einer weiteren erfindungsgemäßen Auslegung wird die Polyacrylathaftklebemasse grundsätzlich nur strukturiert bestrahlt. Dieses Verfahren zur Herstellung von strukturierten Polyacrylaten durch strukturierte Vernetzung von Polyacrylatmischungen zeichnet sich dadurch aus, dass die Basispolymermischung durch derart mit ultraviolettem. Licht bestrahlt wird, dass nur bestimmte Bereiche der Polymermischung der UV-Strahlung ausgesetzt sind.

Das Verfahren zur Herstellung läßt sich im Besonderen derart durchführen, dass die Basispolymermischung durch eine Lochmaske derart mit ultraviolettem Licht bestrahlt wird, dass nur bestimmte Bereiche der Polymermischung der UV-Strahlung ausgesetzt sind.

Alternativ läßt sich die Strukturierung des zu härtenden Polymergemisches dadurch erzielen, dass statt der Lochmaske eine Folie, welche in der Fläche Bereiche unterschiedlicher UV-Licht-Durchlässigkeit aufweist, verwendet wird, so dass bestimmte Bereiche der Polymermischung unterschiedlichen Intensitäten der UV-Strahlung ausgesetzt sind.

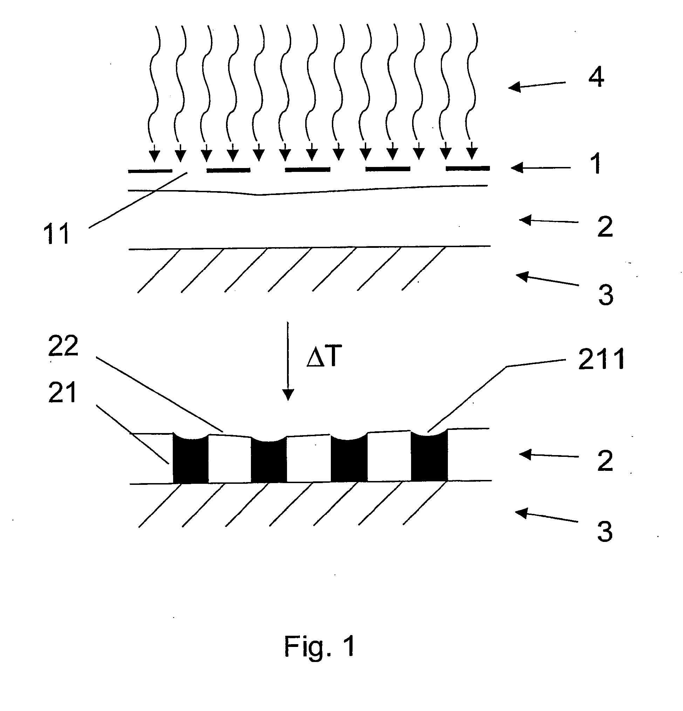

Das vorstehend geschilderte Verfahren wird nachfolgend anhand von Fig. 1 dargestellt
Fig. 1: schematische Darstellung einer strukturierten Vernetzung durch UV-Bestrahlung durch eine Lochmaske.

In der Figur 1 wird die Bestrahlung der Acrylatmasse (2) durch eine Lochmaske (1) dargestellt, wobei sich die Acrylatmasse (2) auf dem Träger (3) befindet. Der Acrylatmasse (1) ist gemäß dem Hauptanspruch ein Photobasenerzeuger beigemischt, der durch UV-Licht (4) und Wasser und bei hohen Temperaturen (ΔT) eine teilweise Vernetzung von Epoxidgruppen des Polymers (2) vornimmt. Die ultravioletten Strahlen (4) können die Maske (1) nur im Bereich der Löcher (11) durchdringen, so dass sich nach der Bestrahlung die im unteren Teil der Abbildung dargestellte Situation ergibt: Die Haftklebemasse (2) weist harte Segmente hoher Vernetzung (21) neben unvernetzten weichen Segmenten (22) auf.

Die Polymerketten an den Rändern der harten Bereiche reichen in die weichen Bereiche hinein, die harten und in sich hochviskosen Bereiche sind somit mit den weichen Bereichen verknüpft und behindern diese daher in ihrer Beweglichkeit, so dass die strukturelle Festigkeit der Klebmasse erhöht wird. Diese harten Segmente erhöhen zudem die Kohäsion der Haftklebemasse. Dagegen bewirken die weichen Segmente (22) ein leichteres Auffließen der Klebemasse auf dem Substrat und erhöhen somit die Klebkraft und die Haftklebrigkeit (Tack). Einen großen Einfluß auf die klebtechnischen Eigenschaften hat der prozentuale Anteil der bestrahlten Fläche sowie die Größe der erzeugten Segmente.

Inhalt der Erfindung ist weiterhin die Verwendung des Polyacrylates als Haftklebemasse, insbesondere die Verwendung als Haftklebemasse für ein Klebeband, wobei die Acrylathaftklebemasse als ein- oder doppelseitiger Film auf einer Trägerfolie vorliegt.

### Beispiele

Die folgenden beispielhaften Experimente sollen den Inhalt der Erfindung näher erläutern, ohne durch die Wahl der Beispiele die Erfindung unnötig einschränken zu wollen.

### Testmethoden

Zur Charakterisierung der Polyacrylatmassen und deren vemetzter Produkte dienten die im folgenden dargestellten Testmethoden:

### Scherfestigkeit (Test A1, A2)

Ein 13 mm breiter Streifen des Klebebandes wurde auf eine glatte und gereinigte Stahloberfläche aufgebracht. Die Auftragsfläche betrug 20 mm x 13 mm (Länge x Breite). Anschließend wurde wie folgt vorgegangen:
Test A1: Bei Raumtemperatur wurde ein 1 kg-Gewicht an dem Klebeband befestigt und die Zeit bis zum Abfallen des Gewichtes gemessen.
Test A2: Bei 70 °C wurde ein 0,5 kg-Gewicht an dem Klebeband befestigt und die Zeit bis zum Abfallen des Gewichtes gemessen.
Die gemessenen Scherstandzeiten sind jeweils in Minuten angegeben und entsprechen dem Mittelwert aus drei Messungen.

### 180° Klebkrafttest (Test B)

Ein 20 mm breiter Streifen einer auf Polyester als Schicht aufgetragenen Acrylat-Haftklebemasse wurde auf zweimal mit Aceton und einmal mit Isopropanol gereinigten Stahlplatten aufgebracht. Der Haftklebestreifen wurde zweimal mit einem 2-kg-Gewicht auf das Substrat aufgedrückt. Das Klebeband wurde anschließend sofort mit 300 mm/min und im 180°-Winkel vom Substrat abgezogen und die hierzu benötigte Kraft gemessen. Alle Messungen wurden bei Raumtemperatur durchgeführt.
Die Meßergebnisse sind in N/cm angegeben und sind gemittelt aus drei Messungen.

### Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### Durchführung des Hotmeltprozeßes im Meßkneter:

Die Scherung und thermische Belastung der Acrylathotmelts wurde mit dem Meßkneter Rheomix 610p der Fa. Haake durchgeführt. Als Antriebseinheit stand das Gerät Rheocord RC 300p zur Verfügung. Gesteuert wurde das Gerät mit der Software PolyLab System. Der Kneter wurde jeweils mit 52 g reiner Acrylathaftklebemasse (~80 % Füllgrad) befüllt. Die Versuche wurden bei einer Knettemperatur von 120°C, einer Umdrehungszahl von 60 U/min und einer Knetzeit von 6 Stunden durchgeführt. Anschließend wurden die Muster, wenn möglich, wieder aufgelöst und der Gelanteil nach Test C bestimmt.

### UV-Bestrahlung

Zur UV-Bestrahlung wurde eine UV-Anlage der Fa. Eltosch verwendet. Die Anlage ist ausgerüstet mit einem Hg-UV-Mitteldruckstrahler mit einer Intensität von 120 W/cm. Die Lappenmuster wurden jeweils mit einer Geschwindigkeit von 20 m/min durch die Anlage gefahren, wobei zur Erhöhung der Bestrahlungsdosis die Muster in mehreren Durchgängen bestrahlt wurden. Die UV-Dosis wurde mit dem Power-Puck der Fa. Eltosch gemessen. Die Dosis eines Bestrahlungsdurchganges betrug ca. 140 mJ/cm² im UV-B Bereich und 25 mJ/cm² im UV-C Bereich.

### Photobasenerzeuger:

Bis[[2-nitrobenzyl)oxy]carbonyl]hexan-1,6-diamin (XIIa) wurde nach Vorschrift in Journal of Polymer Science: Part A: Polymer Chemistry, Vol. 31, 3013 - 3020 (1993) hergestellt.

Die Synthese von 4,4'-[Bis[[2-nitrobenzyl)oxy]carbonyl]-trimethylene]dipiperidin (XIIb) erfolgte nach einer Vorschrift von Macromolecules 1997, 30, S. 1304-1310.

### Regler:

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 18(13), S. 1531-1536, 1988. Ausbeute nach Destillation: 72 %. ¹H-NMR (CDCl₃) δ (ppm) : 7,20-7,40 (m, 10 H), 1,53, 1,59 (2 x d, 6 H), 3,71, 381 (2 x m, 2 H).

### Beispiel 1:

Ein für radikalische Polymerisationen konventioneller 2 L-Glasreaktor wurde mit 40 g Acrylsäure, 360 g 2-Ethylhexylacrylat, 0,55 g Bis-2,2'-phenylethyl-thiocarbonat und 170 g Aceton befüllt. Nach 45 Minuten Durchleiten von Stickstoffgas unter Rühren wurde der Reaktor auf 58 °C hochgeheizt und 0,3 g Azoisobutyronitril (AIBN, Vazo 64^{™} , Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt.

Anschließend wurde das Polymer in Lösung mit 5 Gew.-% Bis[[2-nitrobenzyl)oxy]carbonyl]hexan-1,6-diamin abgemischt und anschließend in einem Vakuumtrockenschrank bei 80°C und einem Druck von 10 Torr aufkonzentriert. Anschließend wurde der Hotmeltprozess im Meßkneter durchgeführt. Zur Vernetzung wurde der Acrylathotmelt mit einem beheizbaren Walzenlabcoater mit 50 g/m² auf eine PET-Folie beschichtet, nach der oben beschriebenen Methode mit mehreren Durchgängen mit UV-Licht bestrahlt und dann für 20 Minuten bei 140°C getempert. Die Muster wurden letztendlich nach den Testmethoden A und B ausgetestet.

### Beispiel 2:

Es wurde analog Beispiel 1 vorgegangen. Als Photobasenerzeuger wurden 5 Gew.-% 4,4'-[Bis[[2-nitrobenzyl)oxy]carbonyl]-trimethylene]dipiperidin hinzugegeben.

### Beispiel 3:

Ein für radikalische Polymerisationen konventioneller 2 L-Glasreaktor wurde mit 30 g Acrylsäure, 100 g n-Butylacrylat, 270 g 2-Ethylhexylacrylat, 0,55 g Bis-2,2'-phenylethylthiocarbonat und 170 g Aceton befüllt. Nach 45 Minuten Durchleiten von Stickstoffgas unter Rühren wurde der Reaktor auf 58 °C hochgeheizt und 0,3 g Azoisobutyronitril (AIBN, Vazo 64^{™} , Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt.

Anschließend wurde das Polymer in Lösung mit 3 Gew.-% Bis[[2-nitrobenzyl)oxy]carbonyl]hexan-1,6-diamin abgemischt und anschließend in einem Vakuumtrockenschrank bei 80°C und einem Druck von 10 Torr aufkonzentriert. Anschließend wurde der Hotmeltprozess im Meßkneter durchgeführt. Zur Vernetzung wurde der Acrylathotmelt mit einem beheizbaren Walzenlabcoater mit 50 g/m² auf eine PET-Folie beschichtet nach der oben beschriebenen Methode mit mehreren Durchgängen mit UV-Licht bestrahlt und dann für 20 Minuten bei 140°C getempert. Die Muster wurden letztendlich nach den Testmethoden A und B ausgetestet.

### Beispiel 4:

Ein für radikalische Polymerisationen konventioneller 2 L-Glasreaktor wurde mit 8 g Glycidylmethacrylat, 100 g lsobornylacrylat, 292 g 2-Ethylhexylacrylat, 0,55 g Bis-2,2'-phenylethyl-thiocarbonat und 170 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,3 g Azoisobutyronitril (AIBN, Vazo 64^{™}, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Benzin verdünnt. Die Reaktion wurde nach 48 h Reaktionszeit abgebrochen und auf Raumtemperatur abgekühlt.

Anschließend wurde das Polymer in Lösung mit 3 Gew.-% Bis[[2-nitrobenzyl)oxy]carbonyl]hexan-1,6-diamin abgemischt und anschließend in einem Vakuumtrockenschrank bei 80°C und einem Druck von 10 Torr aufkonzentriert. Anschließend wurde der Hotmeltprozess im Meßkneter durchgeführt. Zur Vernetzung wurde der Acrylathotmelt mit einem beheizbaren Walzenlabcoater mit 50 g/m² auf eine PET-Folie beschichtet, das Muster für einen Tag bei 60°C und 98% Luftfeuchtigkeit gelagert, nach der oben beschriebenen Methode mit mehreren Durchgängen mit UV-Licht bestrahlt und anschließend für 20 Minuten bei 140°C getempert. Die Muster wurden letztendlich nach den Testmethoden A und B ausgetestet.

### Beispiel 5:

Ein für radikalische Polymerisationen konventioneller 2 L-Glasreaktor wurde mit 12 g 2-lsocyanatoethylmethacrylat, 100 g lsobomylacrylat, 288 g 2-Ethylhexylacrylat, 0,55 g Bis-2,2'-phenylethyl-thiocarbonat und 170 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,3 g Azoisobutyronitril (AIBN, Vazo 64^{™}, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Benzin verdünnt. Die Reaktion wurde nach 48 h Reaktionszeit abgebrochen und auf Raumtemperatur abgekühlt.

Anschließend wurde das Polymer in Lösung mit 4 Gew.-% Bis[[2-nitrobenzyl)oxy]carbonyl]hexan-1,6-diamin abgemischt und anschließend in einem Vakuumtrockenschrank bei 80°C und einem Druck von 10 Torr aufkonzentriert. Anschließend wurde der Hotmeltprozess im Meßkneter durchgeführt. Zur Vernetzung wurde der Acrylathotmelt mit einem beheizbaren Walzenlabcoater mit 50 g/m² auf eine PET-Folie beschichtet, nach der oben beschriebenen Methode mit mehreren Durchgängen mit UV-Licht bestrahlt und anschließend für 30 Minuten bei 140°C getempert. Die Muster wurden letztendlich nach den Testmethoden A und B ausgetestet.

### Beispiel 6:

Ein für radikalische Polymerisationen konventioneller 2 L-Glasreaktor wurde mit 28 g Acrylsäure, 80 g Methylacrylat, 292 g 2-Ethylhexylacrylat, 0,40 g Bis-2,2'-phenylethylthiocarbonat und 170 g Aceton befüllt. Nach 45 Minuten Durchleiten von Stickstoffgas unter Rühren wurde der Reaktor auf 58 °C hochgeheizt und 0,3 g Azoisobutyronitril (AIBN, Vazo 64^{™} , Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt.

Anschließend wurde das Polymer in Lösung mit 8 Gew.-% Bis[[2-nitrobenzyl)oxy]carbonyl]hexan-1,6-diamin abgemischt und anschließend in einem Vakuumtrockenschrank bei 80°C und einem Druck von 10 Torr aufkonzentriert. Anschließend wurde der Hotmeltprozess im Meßkneter durchgeführt. Zur Vernetzung wurde der Acrylathotmelt mit einem beheizbaren Walzenlabcoater mit 50 g/m² auf eine PET-Folie beschichtet, mit einer silikonisierten PET-Folie abgedeckt, mit einer Maske mit 60 µm Maschenweite und 40 % Durchlass abgedeckt, mit UV-Licht bestrahlt und dann nach Entfernen der Maske anschließend für 10 Minuten bei 120°C getempert. Die Muster wurden letztendlich nach den Testmethoden A und B ausgetestet.

### ReferenzbeisAiel R1:

Ein für radikalische Polymerisationen konventioneller 2 L-Glasreaktor wurde mit 40 g Acrylsäure, 360 g 2-Ethylhexylacrylat, 0,55 g Bis-2,2'-phenylethyl-thiocarbonat und 170 g Aceton befüllt. Nach 45 Minuten Durchleiten von Stickstoffgas unter Rühren wurde der Reaktor auf 58 °C hochgeheizt und 0,3 g Azoisobutyronitril (AIBN, Vazo 64^{™}, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt.

Anschließend wurde das Polymer in einem Vakuumtrockenschrank bei 80°C und einem Druck von 10 Torr aufkonzentriert. Anschließend wurde der Hotmeltprozess im Meßkneter durchgeführt. Zur Vernetzung wurde der Acrylathotmelt mit einem beheizbaren Walzenlabcoater mit 50 g/m² auf eine PET-Folie beschichtet, nach der oben beschriebenen Methode mit mehreren Durchgängen mit UV-Licht bestrahlt und dann für 20 Minuten bei 140°C getempert. Die Muster wurden letztendlich nach den Testmethoden A und B ausgetestet.

### Resultate

Im folgenden sind die Resultate der Beispiele 1 bis 6 aufgeführt. Es wurden mit Bis[[2-nitrobenzyl)oxy]carbonyl]hexan-1,6-diamin (XIIa) und 4,4'-[Bis[[2-nitrobenzyl)oxy]carbonyl]-trimethylene]dipiperidin (XIIb) zwei unterschiedliche Photobasenerzeuger erprobt. Weiterhin wurden verschiedene Vemetzungsmechanismen erprobt. In den Beispielen 1 bis 3 wurde über die Carbonsäuregruppen der Polyacrylathaftklebemassen vernetzt. In Beispiel 4 wurde die Vernetzung über Epoxidgruppen untersucht und in Beispiel 5 die Vernetzung über Isocyanatgruppen. In Beispiel 6 wurde der erfindungsgemäße Arcylatschmelzhaftkleber über eine Maske selektiv bestrahlt und somit eine strukturierte Haftklebemasse über die Photobasentechnik erzeugt.

Zur Untersuchung der Eignung als Schmelzhaftkleber wurde allen Beispielen ein Hotmelt-Prozess unterzogen. Nach der Polymerisation und Abmischung mit dem Photobasenerzeuger wurde das Lösemittel entfernt und dann der Schmelzhaftkleber im Hotmelt-Kneter bei 120°C für 6 Stunden geknetet. In keinem der Beispiele 1 bis 6 wurde über diesen Zeitraum ein Drehmomentanstieg festgestellt, der auf eine Vergelung und somit thermische Instabilität hingedeutet hätte. Zur Bestätigung wurde ebenfalls der Gelwert ermittelt. Die gemessenen Gelwerte lagen alle bei 0 und bestätigten somit nochmals die thermische Stabilität der Acrylatschmelzhaftkleber.

Zur Überprüfung der Eignung als Haftklebemassen wurden ebenfalls die klebtechnischen Eigenschaften bestimmt. Zudem wurde eine Rerferenzprobe R1 mit einbezogen, die die identische Comonomerzusammensetzung, wie Beispiel 1, aufweist nur keinen Photobasenerzeuger enthält. Da insbesondere die klebtechnischen Eigenschaften von der erfolgreichen Vernetzung der Schmelzhaftkleber abhängen, sind in der folgenden Tabelle ebenfalls die UV-Bestrahlungsdosen im UV-C und UV-B Bereich mit aufgeführt.

| Tabelle 1 | | | | |
|---|---|---|---|---|
| Beispiel | UV-Dosis | SSZ 10 N, RT [min] | SSZ 5 N, 70°C [min] | KK-Stahl [N/cm] |
| | [mJ/cm²] | (Test A1) | (Test A2) | (Test B) |
| 1 | UV-C:150 | +10000 | +10000 | 4.1 |
| | UV-B: 840 | | | |
| R1 | UV-C:150 | 325 | 15 | 1.8 |
| | UV-B: 840 | | | |
| 2 | UV-C: 150 | +10000 | +10000 | 4.2 |
| | UV-B: 840 | | | |
| 3 | UV-C: 150 | 7685 | 4520 | 3.9 |
| | UV-B: 840 | | | |
| 4 | UV-C: 200 | 1240 | 2295 | 4.3 |
| | UV-B: 1120 | | | |
| 5 | UV-C: 200 | 1550 | 1155 | 4.2 |
| | UV-B: 1120 | | | |
| 6 | UV-C: 300 | 2475 | 3420 | 5.1 |
| | UV-B: 1680 | | | |

| | | | | |
|---|---|---|---|---|
| 50 g/m² Masseauftrag auf PET-Folie SSZ: Scherstandzeiten KK: Klebkraft | | | | |

Der Vergleich der Beispiele 1 und R1 zeigt, dass durch den Zusatz des Photobasenerzeugers das Vernetzungsverhalten der Haftklebemasse deutlich verbessert wird. Die Kohäsion (Scherstandzeiten) des Beispiels 1 sind deutlich höher. Zudem spaltet das Referenzbeispiel bei der Klebkraftmessung kohäsiv, so dass hier davon ausgegangen werden kann, dass das Haftklebeband kaum vernetzt ist. Die Beispiele 2 bis 5 unterlegen, dass sowohl unterschiedliche Photobasenerzeuger eingesetzt werden können, dass die Kohäsion der Haftklebemasse durch die Comonomerzusammensetzung der erfindungsgemäßen Acrylatschmelzhaftkleber letztendlich gesteuert werden kann und dass unterschiedliche funktionelle Gruppen zur Vernetzung verwendet werden können. Beispiel 6 liefert die Möglichkeit, auch strukturierte Haftkebemassen durch eine gezielte Vernetzung über die erfindungsgemäßen Haftklebemassen herzustellen.

## Patentansprüche

1. Polyacrylathaftklebemasse, welche im wesentlichen ein Polymerisat aus
a) einem Comonomerengemisch aus
a1) Acrylsäure und/oder Acrylsäureester der folgenden Formel
CH₂ = C(R¹)(COOR²),
wobei R¹ = H oder CH₃ und R² eine Alkylkette mit 1 - 20 C-Atomen ist,
zu 55 - 99 Gew.-%, bezogen auf Komponente (a),
a2) olefinisch ungesättigte Monomere mit funktionellen Gruppen, nämlich insbesondere mit Hydroxygruppen, Sulfonsäuregruppen, Estergruppen, Ethergruppen, Anhydridgruppen, Epoxygruppen, Amidgruppen, Aminogruppen, mit aromatischen, heteroaromatischen und/oder heterozyklischen Gruppen, zu 0 - 30 Gew.-%, bezogen auf Komponente (a),
a3) Acrylat oder Methacrylat mit mindestens einer funktionellen Gruppe zu 1 - 15 Gew.-%, bezogen auf Komponente (a), die dazu befähigt ist mit einer photochemisch erzeugten Base c), gegebenenfalls unter Zusatz eines Katalysators, zu reagieren
enthält, wobei das Polymerisat wenigstens teilweise mit der Base (c) in einem Anteil von 0,01 - 25 Gew.%, bezogen auf die Gesamt-Polymermischung thermisch vernetzt ist.

2. Polyacrylathaftklebemasse nach Anspruch 1, **dadurch gekennzeichnet, dass** für die Monomere (a1) Acrylmomonere eingesetzt werden, die Acryl- und Methacrylsäureester mit Alkylgruppen bestehend aus 4 bis 14 C-Atomen, bevorzugt 4 bis 9 C-Atomen enthalten, insbesondere n-Buiylacrylat, n-Pentylacrylat, n-Hexylacrylat, n-Heptylacrylat, n-Octylacrylat, n-Nonylacrylat, Laurylacrylat, Stearylacrylat, Behenylacrylat, und/oder deren verzweigte Isomere, wie z.B. 2-Ethylhexylacrylat.

3. Polyacrylathaftklebemasse nach Anspruch 1 oder 2 **dadurch gekennzeichnet, dass** für die Monomere (a3) Comonomere mit zumindestens einer Carbonsäuregruppe, einer Isocyanatogruppe oder einer Epoxidgruppe verwendet werden, vorzugsweise Glycidylmethacrylat, Acrylsäure, Methacrylsäure oder 2-Isocyanatoethylmethacrylat.

4. Polyacrylathaftklebemasse nach einem der Ansprüche 1 bis 3, **dadurch gekennzeichnet, dass** zur photochemischen Erzeugung der Base (c) O-Acyloxime, Anilidderivate, Ammoniumsalze oder metallorganische Verbindungen als Photobasenerzeuger eingesetzt werden, die unter UV-Bestrahlung eine Base freisetzen.

5. Verfahren zur Herstellung von Polyacrylatschmelzhaftklebern aus Polymerisaten aus
a) einem Comonomerengemisch aus
a1) Acrylsäure und/oder Acrylsäureestern der folgenden Formel
CH₂ = C(R¹)(COOR²),
wobei R¹ = H oder CH₃ und R² eine Alkylkette mit 1 - 20 C-Atornen ist,
zu 55 - 99 Gew.-%, bezogen auf Komponente (a),
a2) olefinisch ungesättigten Monomeren mit funktionellen Gruppen, nämlich insbesondere mit Hydroxygruppen, Sulfonsäuregruppen, Estergruppen, Ethergruppen, Anhydridgruppen, Epoxygruppen, Amidgruppen, Aminogruppen, mit aromatischen, heteroaromatischen und/oder heterozyklischen Gruppen, zu 0 - 30 Gew.-%, bezogen auf Komponente (a),
a3) Acrylat oder Methacrylat mit mindestens einer funktionellen Gruppe zu 1 - 15 Gew.-%, bezogen auf Komponente (a), die dazu befähigt ist, mit der durch (b) erzeugten Base (c) gegebenenfalls mit einer katalysierenden Verbindung zu reagieren
und
b) wenigstens einem Photobasenerzeuger
zu 0,01 - 25 Gew.-%, bezogen auf die Gesamt-Polymermischung
wobei der Photobasenerzeuger (b) eingemischt oder einpolymerisiert wird und wobei das lösungsmittelfreie oder von Lösungsmittel weitgehend befreite Polymerisat mit dem Photobasenerzeuger (b) im Heißschmelzverfahren auf einen Träger beschichtet wird, während oder nach der Beschichtung mit UV-Licht bestrahlt wird, hierdurch photochemisch eine Base (c) erzeugt und die Masse anschließend thermisch durch Reaktion wenigstens der Komponente (a3) mit der Base (c) vernetzt wird.

6. Verfahren nach Anspruch 5, **dadurch gekennzeichnet, dass** das Lösungsmittel unter Vakuum in der Wärme entzogen wird.

7. Verfahren nach Anspruch 5 oder 6, **gekennzeichnet durch** Auflegen des Polymerisats auf einen Wasserfilm mit anschließendem Übertrag auf das Trägermaterial, wobei das Wasser vorzugsweise zur Vernetzung der Haftklebemasse beiträgt.

8. Verfahren nach einem der Ansprüche 5 bis 7, **dadurch gekennzeichnet, dass** die UV-Bestrahlung während der Beschichtung erfolgt.

9. Verfahren nach einem der Ansprüche 5 bis 8, **dadurch gekennzeichnet, dass** die Polyacrylathaftklebemasse auf dem Trägermaterial vollflächig mit UV-Licht bestrahlt wird und anschließend zur thermischen Vernetzung auf zumindestens 80°C, bevorzugt auf etwa 100°C erhitzt wird.

10. Verfahren nach einem der Ansprüche 5 bis 8, **dadurch gekennzeichnet, dass** zur Herstellung von strukturierten Polyacrylaten eine strukturierte Vernetzung vorgenommen wird, indem das Basis-Polymerisat derart mit ultraviolettem Licht bestrahlt wird, dass nur bestimmte Bereiche der Polymermischung der UV-Strahlung ausgesetzt sind.

11. Verfahren nach Anspruch 10, **dadurch gekennzeichnet, dass** das Basispolymerisat durch eine Lochmaske derart mit ultraviolettem Licht bestrahlt wird, dass nur bestimmte Bereiche der Polymermischung der UV-Strahlung ausgesetzt sind.

12. Verfahren nach Anspruch 10 oder 11, **dadurch gekennzeichnet, dass** das Basispolymerisat durch eine Folie, welche in der Fläche Bereiche unterschiedlicher UV-Licht-Durchlässigkeit aufweist, derart mit ultraviolettem Licht bestrahlt wird, dass bestimmte Bereiche der Polymermischung unterschiedlichen Intensitäten der UV-Strahlung ausgesetzt sind.

13. Verwendung der Polyacrylathaftklebemasse nach einem der Ansprüche 1 bis 4 oder der nach einem der Ansprüche 5 bis 12 hergestellten Schmelzhaftklebemasse für ein- oder doppelseitig mit der Polyacrylathaftklebemasse beschichtete Haftklebebänder und - streifen.

## Claims

1. Polyacrylate pressure-sensitive adhesive which essentially comprises a polymer formed from
a) a comonomer mixture comprising
a1) acrylic acid and/or acrylic esters of the following formula
CH₂ = C(R¹)(COOR²),
where R¹ = H or CH₃ and R² is an alkyl chain having 1 - 20 carbon atoms,
at 55% - 99% by weight, based on component (a),
a2) olefinically unsaturated monomers having functional groups, specifically in particular
having hydroxyl groups, sulfonic acid groups, ester groups,
ether groups, anhydride groups, epoxy groups, amide groups, amino groups,
having aromatic, heteroaromatic and/or heterocyclic groups,
at 0 - 30% by weight, based on component (a),
a3) acrylate or methacrylate having at least one functional group
at 1% - 15% by weight, based on component (a), which is capable of reacting with
a photochemically generated base c), with or without addition of a catalyst,
the polymer being thermally crosslinked at least partly with the base c) in a fraction of 0.01 % - 25% by weight, based on the overall polymer mixture.

2. Polyacrylate pressure-sensitive adhesive of claim 1, **characterized in that** use is made for the monomers (a1) of acrylic monomers which comprise acrylic and methacrylic esters having alkyl groups consisting of 4 to 14 carbon atoms, preferably 4 to 9 carbon atoms, especially n-butyl acrylate, n-pentyl acrylate, n-hexyl acrylate, n-heptyl acrylate, n-octyl acrylate, n-nonyl acrylate, lauryl acrylate, stearyl acrylate, behenyl acrylate, and/or their branched isomers, such as 2-ethylhexyl acrylate, for example.

3. Polyacrylate pressure-sensitive adhesive of claim 1 or 2, **characterized in that** use is made for the monomers (a3) of comonomers containing at least one carboxylic acid group, one isocyanato group or one epoxide group, preferably glycidyl methacrylate, acrylic acid, methacrylic acid or 2-isocyanatoethyl methacrylate.

4. Polyacrylate pressure-sensitive adhesive of any one of claims 1 to 3, **characterized in that** for the photochemical generation of the base (c) use is made of O-acyl oximes, anilide derivatives, ammonium salts or organometallic compounds as photobase generators, which liberate a base under UV irradiation.

5. Process for preparing polyacrylate hotmelt pressure-sensitive adhesives from polymers formed from
a) a comonomer mixture comprising
a1) acrylic acid and/or acrylic esters of the following formula
CH₂ = C(R¹)(COOR²),
where R¹ = H or CH₃ and R² is an alkyl chain having 1 - 20 carbon atoms,
at 55% - 99% by weight, based on component (a),
a2) olefinically unsaturated monomers having functional groups, specifically
having hydroxyl groups, sulfonic acid groups, ester groups,
ether groups, anhydride groups, epoxy groups, amide groups, amino groups,
having aromatic, heteroaromatic and/or heterocyclic groups,
at 0 - 30% by weight, based on component (a),
a3) acrylate or methacrylate having at least one functional group
at 1% - 15% by weight, based on component (a), which is capable of reacting with the base (c) generated by (b), with or without a catalyzing compound,
and b) at least one photobase generator
at 0.01 % - 25% by weight, based on the overall polymer mixture,
where the photobase generator (b) is incorporated by mixing or copolymerization and where the solvent-free polymer or the polymer substantially freed from solvent is coated with the photobase generator (b), in a hotmelt process, onto a backing, and during or after its coating is irradiated with UV light, thereby generating a base (c) photochemically, and the composition is subsequently crosslinked thermally by reaction at least of component (a3) with the base (c).

6. Process of claim 5, **characterized in that** the solvent is removed with heating under reduced pressure.

7. Process of claim 5 or 6, **characterized by** placement of the polymer onto a film of water, with subsequent transfer to the backing material, the water preferably contributing to the crosslinking of the pressure-sensitive adhesive.

8. Process of any one of claims 5 to 7, **characterized in that** UV irradiation takes place during coating.

9. Process of any one of claims 5 to 8, **characterized in that** the polyacrylate pressure-sensitive adhesive on the backing material is irradiated with UV light over its full area and subsequently heated, for the purpose of thermal crosslinking, to at least 80°C, preferably to about 100°C.

10. Process of any one of claims 5 to 8, **characterized in that** structured polyacrylates are prepared by performing a structured crosslinking by irradiating the base polymer with ultraviolet light in such a way that only certain regions of the polymer mixture are exposed to UV radiation.

11. Process of claim 10, **characterized in that** the base polymer is irradiated with ultraviolet light through a perforated mask in such a way that only certain regions of the polymer mixture are exposed to UV radiation.

12. Process of claim 10 or 11, **characterized in that** the base polymer is irradiated with ultraviolet light through a film whose surface has regions of different UV light transparency in such a way that certain regions of the polymer mixture are exposed to different intensities of UV radiation.

13. Use of the polyacrylate pressure-sensitive adhesive of any one of claims 1 to 4 or of the hotmelt pressure-sensitive adhesive prepared according to any one of claims 5 to 12 for pressure-sensitive adhesive tapes and strips coated on one or both sides with the polyacrylate pressure-sensitive adhesive.

## Revendications

1. Masse auto-adhésive à base de polyacrylate, qui contient essentiellement un polymère à base
a) d'un mélange de comonomères constitué par
a1) de l'acide acrylique et/ou de l'ester de l'acide acrylique présentant la formule suivante CH₂ = C(R¹)(COOR²),
où R¹ = H ou CH₃ et R² représente une chaîne alkyle comprenant 1-20 atomes de carbone, à raison de 55-99% en poids, par rapport au composant (a),
a2) des monomères oléfiniquement insaturés présentant des groupements fonctionnels, notamment en particulier des groupements hydroxy, acide sulfonique, ester, éther, anhydride, époxy, amide, amino, des groupements aromatiques, hétéroaromatiques et/ou hétérocycliques, à raison de 0-30% en poids, par rapport au composant (a),
a3) de l'acrylate ou du méthacrylate présentant au moins un groupement fonctionnel à raison de 1-15% en poids, par rapport au composant (a), qui est capable de réagir avec une base produite par voie photochimique (c), le cas échéant avec addition d'un catalyseur
le polymère étant réticulé thermiquement au moins partiellement avec la base (c) en une proportion de 0,01-25% en poids, par rapport au mélange total de polymères.

2. Masse adhésive à base de polyacrylate selon la revendication 1, **caractérisée en ce qu'**on utilise pour les monomères (a1) des monomères d'acryle, qui contiennent des esters de l'acide acrylique et méthacrylique avec des groupements alkyle constitués par 4 à 14 atomes de carbone, de préférence 4 à 9 atomes de carbone, en particulier l'acrylate de n-butyle, l'acrylate de n-pentyle, l'acrylate de n-hexyle, l'acrylate de n-heptyle, l'acrylate de n-octyle, l'acrylate de n-nonyle, l'acrylate de lauryle, l'acrylate de stéaryle, l'acrylate de béhényle, et/ou leurs isomères ramifiés, tels que par exemple l'acrylate de 2-éthylhexyle.

3. Masse auto-adhésive à base de polyacrylate selon la revendication 1 ou 2, **caractérisée en ce qu'**on utilise pour les monomères (a3) des comonomères comprenant au moins un groupement acide carboxylique, un groupement isocyanato ou un groupement époxy, de préférence le méthacrylate de glycidyle, l'acide acrylique, l'acide méthacrylique ou le méthacrylate de 2-isocyanatoéthyle.

4. Masse auto-adhésive à base de polyacrylate selon l'une quelconque des revendications 1 à 3, **caractérisée en ce qu'**on utilise pour la production par voie photochimique de la base (c) des 0-acyloximes, des dérivés d'anilide, des sels d'ammonium ou des composés métallo-organiques comme producteurs de photobases, qui libèrent une base sous l'effet d'une irradiation par des UV.

5. Procédé de préparation de masses auto-adhésives à base de polyacrylate à partir de polymères à base
a) d'un mélange de comonomères constitué par
a1) de l'acide acrylique et/ou des esters de l'acide acrylique présentant la formule suivante CH₂ = C(R¹)(COOR²),
où R¹ = H ou CH₃ et R² représente une chaîne alkyle comprenant 1-20 atomes de carbone,
à raison de 55-99% en poids, par rapport au composant (a),
a2) de monomères oléfiniquement insaturés présentant des groupements fonctionnels, notamment en particulier des groupements hydroxy, acide sulfonique, ester, éther, anhydride, époxy, amide, amino, des groupements aromatiques, hétéroaromatiques et/ou hétérocycliques, à raison de 0-30% en poids, par rapport au composant (a),
a3) de l'acrylate ou du méthacrylate présentant au moins un groupement fonctionnel à raison de 1-15% en poids, par rapport au composant (a), qui est capable de réagir avec la base (c) produite par (b), le cas échéant avec un composé catalyseur
et
b) d'au moins un producteur de photobases, à raison de 0,01-25% en poids, par rapport au mélange total de polymères le producteur de photobases (b) étant mélangé ou copolymérisé et le polymère, exempt de solvant ou dans une large mesure libéré du solvant, avec le producteur de photobases (b), étant revêtu dans un procédé de masse fondue à chaud sur un support, irradié pendant ou après le revêtement avec de la lumière UV, une base (c) étant ainsi produite par voie photochimique et la masse étant ensuite réticulée thermiquement par réaction d'au moins un des composants (a3) avec la base (c).

6. Procédé selon la revendication 5, **caractérisé en ce que** le solvant est éliminé sous vide à chaud.

7. Procédé selon la revendication 5 ou 6, **caractérisé par** le dépôt du polymère sur un film d'eau avec transfert consécutif sur le matériau support, l'eau contribuant de préférence à la réticulation de la masse auto-adhésive.

8. Procédé selon l'une quelconque des revendications 5 à 7, **caractérisé en ce que** l'irradiation par les UV est réalisée pendant le revêtement.

9. Procédé selon l'une quelconque des revendications 5 à 8, **caractérisé en ce que** la masse auto-adhésive à base de polyacrylate sur le matériau support est irradiée sur toute sa surface par de la lumière UV et ensuite chauffée en vue de la réticulation thermique à au moins 80°C, de préférence à environ 100°C.

10. Procédé selon l'une quelconque des revendications 5 à 8, **caractérisé en ce que**, pour la production de polyacrylates structurés, on réalise une réticulation structurée **en ce que** le polymère de base est irradié de telle manière par de la lumière ultraviolette que seules des zones déterminées du mélange de polymères sont exposées au rayonnement UV.

11. Procédé selon la revendication 10, **caractérisé en ce que** le polymère de base est irradié via un cache à trous par de la lumière ultraviolette de telle manière que seules des zones déterminées du mélange de polymères sont exposées au rayonnement UV.

12. Procédé selon la revendication 10 ou 11, **caractérisé en ce que** le polymère de base est irradié via une feuille qui présente dans sa surface des zones présentant différentes transparences à la lumière UV, par de la lumière ultraviolette de telle manière que des zones déterminées du mélange de polymères sont soumises à des intensités différentes du rayonnement UV.

13. Utilisation de la masse auto-adhésive à base de polyacrylate selon l'une quelconque des revendications 1 à 4 ou de la masse auto-adhésive en masse fondue préparée selon l'une quelconque des revendications 5 à 12 pour des rubans et des bandes auto-adhésifs revêtus sur une ou deux faces par la masse auto-adhésive à base de polyacrylate.
